# EUROPEAN PATENT SPECIFICATION

(11) **EP 2 557 646 B1**
(45) Date of publication and mention of the grant of the patent: **01.07.2020**
(21) Application number: 11177113.5
(22) Date of filing: 10.08.2011
(51) Int. Cl.: G06K 17/00, H04L 12/66, H04L 29/08, H04L 29/06, H02H 1/00, H02H 7/26

(54) **Configuration of an IEC 61850 teleprotection IED for inter-substation communication**
Konfiguration einer IEC 61850-Teleschutz-IED zur Kommunikation zwischen automatisierten Verteilerstationen
Configuration d'un dispositif électronique intelligent de téléprotection CEI 61850 pour communication entre postes électriques avec système d'automatisation

(43) Date of publication of application: 13.02.2013
(73) Proprietor: ABB Power Grids Switzerland AG, 5400 Baden (CH)
(72) Inventor: Gygax, Alex, 5023 Biberstein (CH); Wimmer, Wolfgang, 4900 Langenthal (CH)
(74) Representative: Vossius & Partner Patentanwälte Rechtsanwälte mbB

(56) References cited:
- EP-A1- 1 976 218
- EP-A1- 2 211 479
- WO-A1-2007/071212
- HEIKO ENGLERT ET AL: "IEC 61850 substation to control center communication - Status and practical experiences from projects", 2009 IEEE BUCHAREST POWERTECH, 1 June 2009 (2009-06-01), pages 1-6, XP55016074, DOI: 10.1109/PTC.2009.5281942 ISBN: 978-1-42-442234-0

## Description

### FIELD OF THE INVENTION

The invention relates to the field of utility communication, and in particular to communication of teleprotection commands between distant sites of an electric power utility enterprise.

### BACKGROUND OF THE INVENTION

Electric power utilities or transmission system operators own and operate electric power transmission networks interconnecting sites, such as power sources and substations, which have to be coordinated in one way or the other across distances of hundreds of kilometers. Within their utility communication systems, a variety of messages are exchanged over long distance communication links between distant sites of the utility in order to safely transmit and distribute electric energy. For some of these messages, and in particular for teleprotection commands, the transmission delay between transmitter and receiver is critical and should not exceed a few milliseconds up to some 10 ms. For any time-critical application, increased transmission delay, or packet loss, may result in malfunction or even damage of a power system.

Teleprotection commands for distance protection schemes in electrical power networks are conventionally transmitted by remote tripping devices or protection signal transmission devices conventionally known as teleprotection devices, over dedicated point-to-point communication links. Physical signal links may involve radio waves or fiber optics, pilot wires, analog leased lines, voice channels of analog or digital communication systems, or even high-voltage electricity transmission lines, the latter being known as power line communication (PLC). Dedicated teleprotection systems permanently monitor the state of a communication system, for instance by means of dedicated loop test messages periodically exchanged.

For securely transmitting messages over long distances from one site to the other, the utility may also rely on a Wide-Area communication Network (WAN). In the present context, a WAN can be a dedicated point-to-point communication link between two sites based on e.g. optical fiber or pilot wires, a connection-oriented communication network with a guaranteed data rate such as Ethernet over SDH / HDLC, or a packet-oriented communication network interconnecting a number of sites of the utility, and comprising a plurality of specific network elements such as switches, repeaters and possibly optical transmission media at the physical layer (cf. EP-A1-2211479).

A communication standard for communication between the devices of a Substation Automation system has been introduced as part of the standard IEC 61850 entitled "Communication networks and systems for power utility automation". For the exchange of non-time critical messages within substations, IEC 61850-8-1 specifies the Manufacturing Message Specification (MMS, ISO/IEC 9506) protocol based on a reduced Open Systems Interconnection (OSI) protocol stack with the Transmission Control Protocol (TCP) and Internet Protocol (IP) in the transport and network layer, respectively, and Ethernet as physical medium. For the exchange of time-critical event-based messages within substations, IEC 61850-8-1 specifies the Generic Object Oriented Substation Events (GOOSE) and the Generic Substation State Events (GSSE) directly on the Ethernet link layer (OSI-Layer 2) of the communication stack. Hence, the standard defines a format to publish event-based messages as multicast messages on an industrial Ethernet.

The standard IEC 61850 is concerned with communication systems and communication networks or Local Area Networks (LANs) within substations. Modelling of applications involving communication between substations such as teleprotection is out of the scope of edition 1 of the standard. However, in order to extend the concepts of the standard to the communication between substations, chapter 8 entitled "Communication Aspects" of the report IEC/TR 61850-90-1 (E) entitled "Communication networks and systems for power utility automation - Part 90-1: Use of IEC 61850 for the communication between substations" proposes two approaches:

In a "tunneling" approach, messages are forwarded transparently, i.e. without any loss of information through message conversion at the interface between a LAN of a substation and the WAN connecting the substations.

In the "proxy gateway" approach, the messages to be exchanged between the substations are modified for transmission over the WAN, in other words, the relevant information content is extracted from the intra-substation messages according to IEC 61850 and embedded in a different inter-substation message. Thus, from an IEC 61850 point-of-view, the message transmission is not transparent. For teleprotection applications, this approach allows using conventional teleprotection equipment as the teleprotection IED or proxy gateway, which incorporates channel supervision and monitoring functionality and which is designed to reliably and securely convey protection commands with low delay over communication channels with limited bandwidth such as radio links, copper wires or power line carriers. To this purpose, on the sending side of the WAN teleprotection link, the commands must be extracted from the IEC 61850 messages carrying these commands, while on the receiving side, the original IEC 61850 messages must be reconstructed using the commands delivered by the teleprotection equipment.

Despite of the fact that only a single bit is actually being transmitted per teleprotection signal the semantics of the communicated teleprotection commands has to be retained during transmission. This requires matched a priori information to be exchanged prior to and independently of the command and corresponding configurations in the teleprotection devices of both substations. According to IEC 61850 this is conventionally achieved with the introduction and the exchange of Instantiated IED Description (IID) files for the proxy gateways representing the protection relays of the opposite substation, and thus overcoming the lack of signal semantics. The IID files are generated according to the Substation Configuration Description file of a substation and are provided to the respective opposite substation for further processing, giving rise to two interdependent engineering processes at the two substations.

A teleprotection link between two teleprotection IEDs is adapted to transmit a number of teleprotection commands, each according to a specific command application scheme such as blocking, permissive or direct tripping. The command application schemes differ in terms of dependability, security and transmission time. Accordingly, the different teleprotection commands have to be matched properly with the corresponding functionalities implemented in the protection relays at the two substations.

Often the teleprotection equipment is engineered, installed and commissioned ahead of the residuary Substation Automation (SA) equipment and with different personnel working for different companies. This complicates the interchange of the required information in order to retain the IEC 61850 signal semantics between the teleprotection equipment and the corresponding protection devices of the SA system. Hence, Substation Configuration Description files are required at a point in time when they might not yet exist or which are not available to the teleprotection engineering personnel.

### DESCRIPTION OF THE INVENTION

It is an objective of the invention to enable a utility, in particular an electric power utility, to efficiently configure inter-substation communication networks for exchanging teleprotection commands between two distant substations or sites of the utility. This objective is achieved by a method of engineering inter-substation teleprotection functionality and by a teleprotection engineering tool according to the independent claims. Further preferred embodiments are evident from the dependent patent claims, wherein the claim dependency shall not be construed as excluding further meaningful claim combinations.

According to the invention, a method of engineering inter-substation teleprotection functionality, wherein teleprotection messages according to IEC 61850 are transmitted over substation communication networks within substations of an electric power network, and wherein unidirectional teleprotection commands are transmitted over a teleprotection link between teleprotection Intelligent Electronic Devices (IED) connected to the substation communication networks comprises
- providing a link definition, or link specification, for the teleprotection link including, for each teleprotection command to be transmitted over the teleprotection link, a command application scheme such as blocking, permissive, direct tripping, and
- generating, by an IED Capability Description (ICD) generation module and based on the provided link definition, ICD files required as source for the configuration process of IEC 61850 interfaces of the teleprotection IEDs.

In other words, the teleprotection system engineering process starts with the generation of a description of the two teleprotection IEDs at the two substations connected via the teleprotection link, based on the intended functionality or semantics to be transferred between the substations and the needed telecommunication properties for this semantics. A corresponding teleprotection link definition is manually entered into the ICD generation module and used as a unique input for a co-generation of two matching ICD files representing the two teleprotection IEDs or IEC 61850 gateways. A single ICD generation module or function block performs this task thus reducing the possibilities for erroneous manual input of the link definition data and keeping the two ICD files consistent.

The generation of the two ICD files occurs prior to, and hence independently of, any generation of Substation Configuration Description (SCD) files, i.e. before a detailed Substation Automation (SA) system engineering actually takes place. An automatic match of the IEC 61850 based configurations of the teleprotection IED and of the protection relays with the actual communication channel capacity and the teleprotection IED constraints is achieved by the fact that all subsequent engineering steps revert to the generated ICD files.

The present invention also relates to a computer program product including computer program code for controlling one or more processors of a teleprotection engineering tool for generation of an IEC 61850 ICD file of an IEC 61850 interface of a teleprotection IED, particularly, a computer program product including a computer readable medium containing therein the computer program code.

### BRIEF DESCRIPTION OF THE DRAWINGS

The subject matter of the invention will be explained in more detail in the following text with reference to preferred exemplary embodiments which are illustrated in the attached drawings, in which:
Fig.1 depicts a teleprotection system of an electric power transmission utility,
Fig.2 depicts schematically a teleprotection system engineering process,
Fig.3 is an SCL excerpt of an ICD file generated according to the invention, and
Fig.4 is an SCL excerpt of a counterpart ICD file generated according to the invention.

### DETAILED DESCRIPTION OF PREFERRED EMBODIMENTS

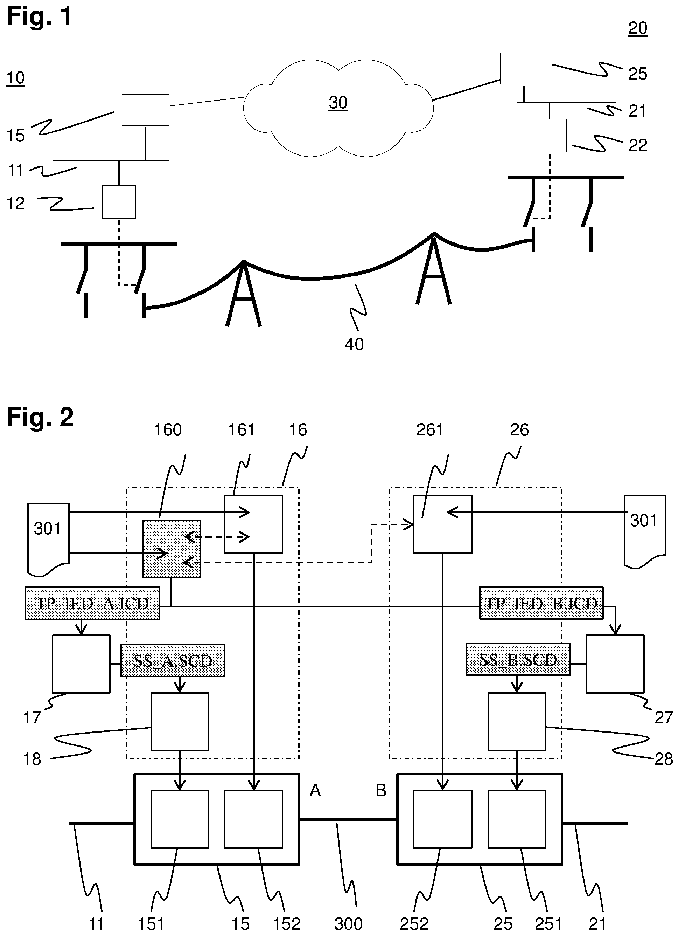

Fig.1 depicts a teleprotection system of an electric power transmission utility with a first substation 10, a second substation 20, an overhead power line 40 between the two substations 10, 20, and a Wide Area Network (WAN) communication network 30. In both substations, an intra-substation or Local Area Network (LAN) communication network 11, 21 interconnects substation secondary equipment, such as protection relays or protection and control Intelligent Electronic Devices (IED) 12, 22, and enables an exchange of messages according to IEC 61850. Two teleprotection IEDs, or teleprotection terminals, or proxy gateways 15, 25 are provided as interfaces between the LANs 11, 21 and the WAN 30. The protection relays 12, 22 in turn are connected to the primary equipment of the substation and generate commands or states to be transmitted, and preferably related to a distance protection scheme on behalf of the power line. By way of example, teleprotection commands according to a command application scheme such as blocking, permissive or direct tripping, and including corresponding signal detection criteria in terms of dependability, security and transmission time, result in a blocking, permissive or direct tripping state of a switching device at the respective remote destination site.

Fig.2 depicts schematically the teleprotection specific part of the overall system engineering process for a teleprotection system as depicted in Fig.1. Again, teleprotection IED 15 in substation A is connected to teleprotection IED 25 at substation B via teleprotection link 300 as exemplary inter-substation WAN. The two teleprotection IEDs comprise each a line interface 152, 252 and an IEC 61850 interface 151, 251. The communication link 300 is defined to comprise, or provide, a limited number of (e.g. n=8) unidirectional teleprotection commands or signals in accordance with the specific needs of the electric power transmission utility. A manual teleprotection link definition 301 includes, for each command, a selection of parameters such as source and destination protection relay as well as a command application scheme according to IEC 60834-1, i.e. blocking, permissive or direct tripping. The link definition 301 may be provided manually by an operator of the electric power network and input to ICD generation module or function block 160 and/or to line interface configuration module 161 of a teleprotection IED engineering tool or process 16 used at substation A. Similarly, mirrored link definition 301 with exchanged signal directions is input to line interface configuration module 261 of a teleprotection IED engineering tool or process 26 used at substation B. The line interface configuration modules 161, 261 are used to configure the respective line interface 152, 252, by means of line interface configuration data.

According to the invention, and as indicated by the dashed arrows in Fig.2, link definition 301 is input only to a single ICD generation module 160 and subsequently conveyed to, or imported by, the line interface configuration module 161. On the other hand, link definition 301 may be input to the line interface configuration modules 161, 261 and subsequently conveyed to, or imported by, the ICD generation module 160, possibly in the form of line interface configuration data from which the abovementioned relevant information can be extracted.

The link definition 301 on behalf of the ICD generation module 160 may include, for each teleprotection command, additional input data such as
- Command source and destination Logical Nodes (LN) according to IEC 61850-7-4, such as Generic I/O (GGIO), Protection Scheme (PSCH), and Protection Breaker Failure (RBRF).
- Common data attributes according to IEC 61850-7-3, such as data values (stVal) or data quality indication (q).

At this point, the ICD generation module may proceed to consistency verification, or to a limitation of options, of the link-specific input parameter data. It ensures that the selected common data attribute as well as the command application scheme of a particular protection command both fit to the corresponding LN. By way of example, for LN RBRF only the direct command application scheme and either common data attribute 'general' or 'q' can be selected. Further verifications concern adherence to teleprotection IED specific rules (e.g. no transmission of common data attribute 'q' without corresponding transmission of common data attribute 'general') or restriction of the available LN classes or any other rule which helps in the configuration and system engineering process and facilitates the user interaction.

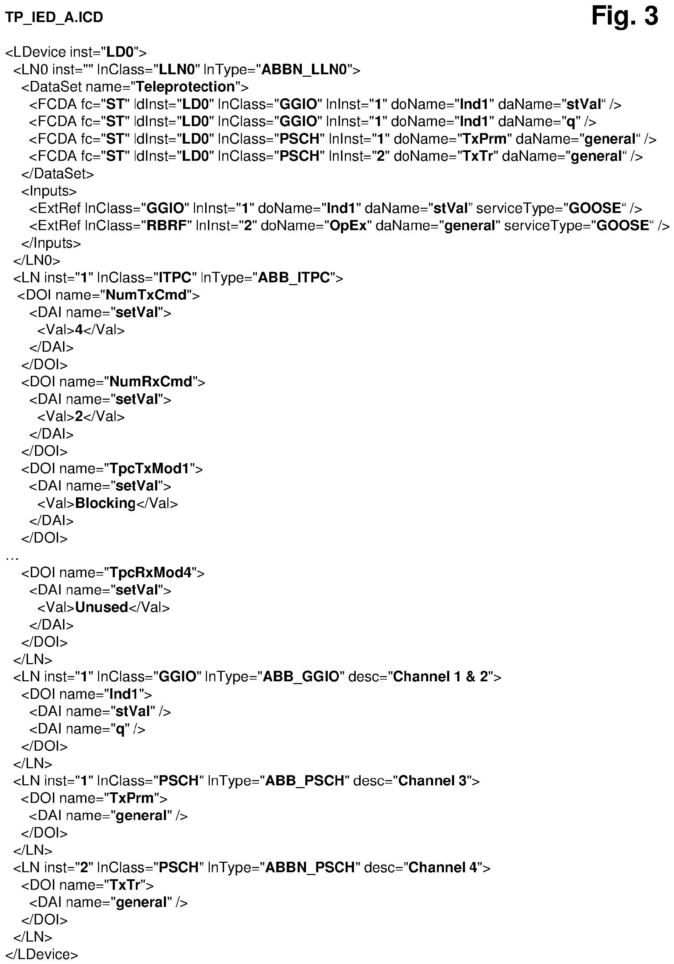

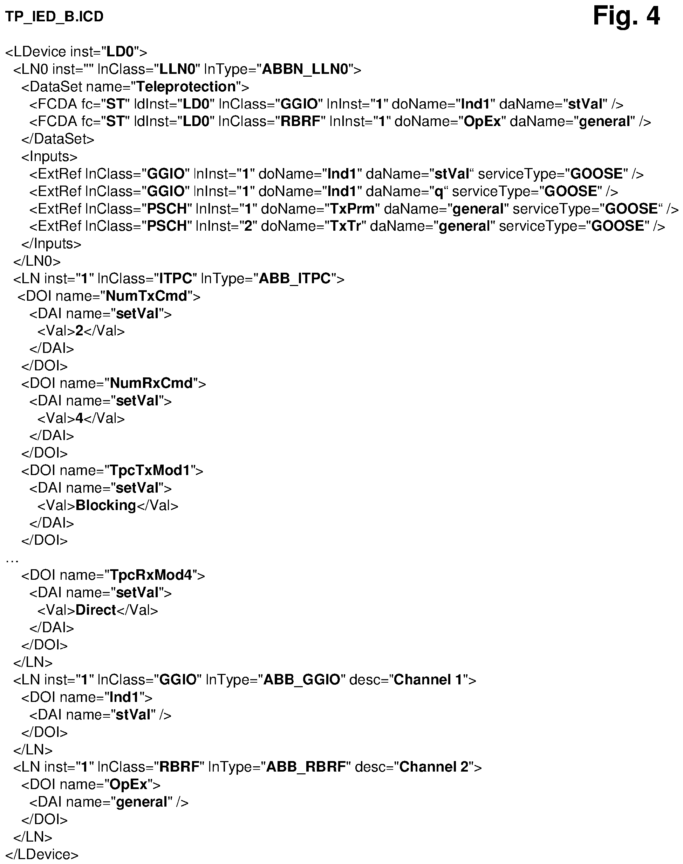

Fig.3 and Fig.4 are SCL excerpts of the two counterpart IED Capability Description files TP_IED_A.ICD and TP_IED_B.ICD, with omissions from the original files in both cases marked by triple dots. The LN class Interface Teleprotection Communication (ITPC) is the standard LN responsible for communication channel state indication. In the present case, the maximum number of commands available in the teleprotection device is n=8. Out of these, the user selected number (4) of teleprotection commands in direction substation A to B is written to the Data Object instance (DO) 'NumTxCmd' in TP_IED_A.ICD and to 'NumRxCmd' in TP_IED_B.ICD. The user selected number (2) of teleprotection commands in direction substation B to A is written to DO 'NumRxCmd' in TP_IED_A.ICD and to 'NumTxCmd' in TP_IED_B.ICD.

The command application scheme is written to Data Attribute instance (DA) 'setVal' in DO 'TpcTxModn' and 'TpcRxModn' in LN 'ITPC'. For instance, the command application scheme of channel (command) '1' in direction substation A to B is selected 'Blocking' and this value is written to TpcTxMod1 in TP_IED_A.ICD and to TpcRxMod1 in TP_IED_B.ICD. As only two teleprotection commands are transmitted from substation B to substation A, the last two DA 'TpcRxMod3' 'TpcRxMod4' in TP_IED_A.ICD are disabled and both have the value 'Unused'.

The six used teleprotection commands are assigned to the LNs Generic I/O (GGIO), Protection Scheme (PSCH), and Protection Breaker Failure (RBRF) as follows. From Substation A to substation B, the DA 'stVal' and the DA 'q' of DO `Ind1' of LN 'GGIO' are assigned to channels (commands) '1' and '2', respectively. The DA 'general' of DO 'TxPrm' of instance '1' of LN 'PSCH' is assigned to channel (command) '3', while the DA 'general' of DO 'TxTr' of instance '2' of LN 'PSCH' is assigned to channel (command) '4'. From substation B to substation A, DA 'stVal' of DO 'Ind1' of LN 'GGIO' is assigned to channel (command) '1' and DA 'general' of DO 'OpEx' of LN 'RBRF' is assigned to channel (command) '2'.

The resulting two ICD files are input independently to respective IEC 61850 Substation Automation system engineering tools 17, 27 where they provide information which exactly matches the link definition in the line interface of the teleprotection equipment. The tool 17, 27 finally connects the teleprotection IED 15, 25 inputs and outputs with protection relays 12, 22 of the SA systems. The completely engineered SA systems for substations A and B are afterwards exported to a Substation Configuration Description (SCD) file SS_A.SCD and SS_B.SCD, respectively. With the latter file, an IED configuration generation module 18, 28 of the teleprotection IED engineering tool 16, 26 is capable of generating the SCL based IED configuration in the form of a Configured IED Description (CID) file which finally can be downloaded to the teleprotection IED 15, 25. The CID, in addition to the ICD or to the IID of the conventional approach, includes subsequent engineering information related to all IEDs logically attached to the teleprotection IED.

Complementary to the ICD files mentioned above, two line interface configuration files can be optionally generated from the ICD generation module, one for substation A and one for substation B. They already specify a part of the line interface configuration of both sides of the communication link and therewith ease the further configuration process of the involved line interfaces. The two line interface configuration files can be imported into the line interface configuration generation function block of the teleprotection IED engineering tool. Therewith the basic teleprotection command settings are already defined and only have to be supplemented with additional line interface specific settings, e.g. the line interface type and bandwidth.

## Claims

1. A method of inter-substation teleprotection engineering, wherein teleprotection messages according to IEC 61850 are transmitted over a first and second substation communication network (11, 21) within a first and a second substation (10, 20) of an electric power network, respectively, and wherein teleprotection commands are transmitted over a teleprotection link (300) between a first and a second teleprotection IED (15, 25) connected respectively to the first and second substation communication network (11, 21), comprising
- providing a link definition (301) for the teleprotection link (300) including, for each teleprotection command to be transmitted over the teleprotection link (300), a command application scheme,
**characterised in that** said method further comprises
- generating, by a single IED Capability Description, ICD, generation module (160) and based on the provided link definition (301), a first ICD file (TP_IED_A.ICD) for a configuration of an IEC 61850 interface (151) of the first teleprotection IED (15), and a second ICD file (TP_IED_B.ICD) for a configuration of an IEC 61850 interface (251) of the second teleprotection IED (25).

2. The method according to claim 1, comprising,
- providing a link definition (301) including, for each teleprotection command, a SA functionality in terms of an IEC 61850 Logical Node LN (GGIO, PSCH, RBRF) and corresponding Data Attributes DA (stVal, general, q).

3. The method according to claim 2, comprising
- verifying, by the ICD generation module (160), a consistency of the link definition (301).

4. The method according to claim 1, comprising,
- providing the first and second ICD file (TP_IEDA.ICD, TP_IED_B.ICD) to a respective IEC 61850 Substation Automation, SA, system engineering tool (17, 27),
- generating a Substation Configuration Description, SCD, file (SS_A.SCD, SS_B.SCD) for the first and second substation, and
- configuring a respective IEC 61850 interface (151, 251) of the first and second teleprotection IED (15, 25) based on the respective SCD file.

5. The method according to claim 1, comprising,
- generating, by means of a line interface configuration module (161, 261), a line interface configuration based on the link definition (301), and
- configuring a respective line interface (152, 252) of the first and second teleprotection IED (15, 25) based on the respective line interface configuration.

6. The method according to claim 5, comprising,
- providing, by a human operator, the link definition (301) to only one of ICD generation module (160) and line interface configuration module (161), and
- importing, by the teleprotection IED engineering tool (16), the channel definition (301) into the respective other module (161, 160).

7. A teleprotection engineering tool (16) for inter-substation teleprotection, wherein teleprotection messages according to IEC 61850 are transmitted over a first and second substation communication network (11, 21) within a first and a second substation (10, 20) of an electric power network, respectively, and wherein teleprotection commands are transmitted over a teleprotection link (300) between a first and a second teleprotection IED (15, 25) connected respectively to the first and second substation communication network (11, 21), comprising
- an IED Capability Description ICD generation module (160),
**characterised in that**
said IED Capability Description ICD generation module (160) is configured for generating, based on a teleprotection link definition (301) including, for each teleprotection command to be transmitted over the teleprotection link (300), a command application scheme, a first ICD file (TP_IED_A.ICD) for a configuration of an IEC 61850 interface (151) of the first teleprotection IED (15), and a second ICD file (TP_IED_B.ICD) for a configuration of an IEC 61850 interface (251) of the second teleprotection IED (25).

## Patentansprüche

1. Verfahren zur Teleschutztechnik zwischen Verteilerstationen, wobei Teleschutznachrichten gemäß IEC 61850 über ein erstes und ein zweites Verteilerstationskommunikationsnetz (11, 21) innerhalb einer ersten bzw. einer zweiten Verteilerstation (10, 20) eines Stromversorgungsnetzes übertragen werden, und wobei Teleschutzbefehle über eine Teleschutzverbindung (300) zwischen einer ersten und einer zweiten Teleschutz-IED (15, 25) übertragen werden, die mit dem ersten bzw. zweiten Verteilerstationskommunikationsnetz (11, 21) verbunden sind, aufweisend
- Bereitstellen einer Verbindungsdefinition (301) für die Teleschutzverbindung (300), die für jeden über die Teleschutzverbindung (300) zu übertragenden Teleschutzbefehl ein Befehlsanwendungsschema enthält,
**dadurch gekennzeichnet, dass** das Verfahren ferner aufweist:
- Erzeugen einer ersten ICD-Datei (TP_IED_A.ICD) zum Konfigurieren einer IEC 61850-Schnittstelle (151) der ersten Teleschutz-IED (15) und einer zweiten ICD-Datei (TP_IED_B.ICD) zum Konfigurieren einer IEC 61850-Schnittstelle (251) der zweiten Teleschutz-IED (25) durch ein einzelnes IED-Fähigkeitsbeschreibungs-, ICD, Erzeugungsmodul (160) und basierend auf der bereitgestellten Verbindungsdefinition (301).

2. Verfahren nach Anspruch 1, aufweisend:
- Bereitstellen einer Verbindungsdefinition (301), die für jeden Teleschutzbefehl eine SA-Funktionalität im Sinne eines IEC 61850 logischen Knotens, LN, (GGIO, PSCH, RBRF) und die entsprechenden Datenattribute, DA, (stVal, general, q) enthält.

3. Verfahren nach Anspruch 2, aufweisend:
- Überprüfen einer Konsistenz der Verbindungsdefinition (301) durch das ICD-Erzeugungsmodul (160).

4. Verfahren nach Anspruch 1, aufweisend:
- Bereitstellen der ersten und zweiten ICD-Datei (TP_IED_A. ICD, TP_IED_B. ICD) an ein entsprechendes IEC 61850-Verteilerstationsautomatisierungs-, SA, Systemtechniktool (17, 27),
- Erzeugen einer Verteilerstationskonfigurationsbeschreibungs-, SCD, Datei (SS_A.SCD, SS_B.SCD) für die erste und zweite Verteilerstation, und
- Konfigurieren einer entsprechenden IEC 61850-Schnittstelle (151, 251) der ersten und zweiten Teleschutz-IED (15, 25) basierend auf der entsprechenden SCD-Datei.

5. Verfahren nach Anspruch 1, aufweisend:
- Erzeugen einer Leitungsschnittstellenkonfiguration mittels eines Leitungsschnittstellenkonfigurationsmoduls (161, 261), basierend auf der Verbindungsdefinition (301), und
- Konfigurieren einer entsprechenden Leitungsschnittstelle (152, 252) der ersten und zweiten Teleschutz-IED (15, 25) basierend auf der entsprechenden Leitungsschnittstellenausbildung.

6. Verfahren nach Anspruch 5, aufweisend:
- Bereitstellen der Verbindungsdefinition (301) durch einen menschlichen Bediener zu nur einem von ICD-Erzeugungsmodul (160) und Leitungsschnittstellenkonfigurationsmodul (161), und
- Importieren der Kanaldefinition (301) durch das Teleschutz-IED-Techniktool (16) in das jeweils andere Modul (161, 160).

7. Teleschutztechniktool (16) zum Teleschutz zwischen Verteilerstationen, wobei Teleschutznachrichten gemäß IEC 61850 über ein erstes und ein zweites Verteilerstationskommunikationsnetz (11, 21) innerhalb einer ersten bzw. einer zweiten Verteilerstation (10, 20) eines Stromversorgungsnetzes übertragen werden, und wobei Teleschutzbefehle über eine Teleschutzverbindung (300) zwischen einer ersten und einer zweiten Teleschutz-IED (15, 25) übertragen werden, die mit dem ersten bzw. zweiten Verteilerstationskommunikationsnetz (11, 21) verbunden sind, aufweisend
- ein IED-Fähigkeitsbeschreibungs-, ICD, Erzeugungsmodul (160),
**dadurch gekennzeichnet, dass**
das IED-Fähigkeitsbeschreibungs-, ICD, Erzeugungsmodul (160) zum Erzeugen einer ersten ICD-Datei (TP_IED_A.ICD) für eine Konfiguration einer IEC 61850-Schnittstelle (151) der ersten Teleschutz-IED (15) und einer zweiten ICD-Datei (TP_IED_B.ICD) für eine Konfiguration einer IEC 61850-Schnittstelle (251) der zweiten Teleschutz-IED (25) basierend auf einer Teleschutzverbindungsdefinition (301), die ein Befehlsanwendungsschema für jeden über die Teleschutzverbindung (300) zu übertragenden Teleschutzbefehl enthält, ausgebildet ist.

## Revendications

1. Un procédé d'ingénierie de téléprotection entre sous-stations, des messages de téléprotection selon la norme IEC 61850 étant transmis sur un premier et un second réseau de communication de sous-station (11, 21) à l'intérieur d'une première et d'une seconde sous-station (10, 20) d'un réseau électrique, respectivement, et des commandes de téléprotection étant transmises sur une liaison de téléprotection (300) entre un premier et un second IED de téléprotection (15, 25) connectés respectivement au premier et au second réseau de communication de sous-station (11, 21), comprenant :
- la fourniture d'une définition de liaison (301) pour la liaison de téléprotection (300) comprenant, pour chaque commande de téléprotection à transmettre sur la liaison de téléprotection (300), un schéma d'application de commande,
**caractérisé en ce que** ledit procédé comprend en outre :
- la génération, par un unique module de génération de description de capacité IED, ICD (160) et sur la base de la définition de liaison fournie (301), d'un premier fichier ICD (TP_IED_A.ICD) pour une configuration d'une interface IEC 61850 (151) du premier IED de téléprotection (15), et d'un second fichier ICD (TP_IED_B.ICD) pour une configuration d'une interface IEC 61850 (251) du second IED de téléprotection (25).

2. Le procédé selon la revendication 1, comprenant :
- la fourniture d'une définition de liaison (301) comprenant, pour chaque commande de téléprotection, une fonctionnalité SA en termes de nœud logique LN (GGIO, PSCH, RBRF) selon la norme IEC 61850 et les attributs de données DA correspondants (stVal, général, q).

3. Le procédé selon la revendication 2, comprenant :
- la vérification, par le module de génération ICD (160), de la cohérence de la définition de liaison (301).

4. Le procédé selon la revendication 1, comprenant :
- la fourniture du premier et du second fichier ICD (TP_IED_A.ICD, TP_IED_B.ICD) à un outil d'ingénierie système d'automatisation de sous-station, SA, IEC 61850 (17, 27) respectif,
- la génération d'un fichier de description de la configuration de sous-station, SCD, (SS_A.SCD, SS_B.SCD) pour la première et la seconde sous-station, et
- la configuration d'une interface IEC 61850 (151, 251) respective des premier et second IED de téléprotection (15, 25) sur la base du fichier SCD respectif.

5. Le procédé selon la revendication 1, comprenant :
- la génération, au moyen d'un module de configuration d'interface de ligne (161, 261), d'une configuration d'interface de ligne basée sur la définition de liaison (301), et
- la configuration d'une interface de ligne respective (152, 252) du premier et du second IED de téléprotection (15, 25) sur la base de la configuration d'interface de ligne respective.

6. Le procédé selon la revendication 5, comprenant :
- la fourniture, par un opérateur humain, de la définition de liaison (301) à un seul du module de génération ICD (160) et du module de configuration d'interface de ligne (161), et
- l'importation, par l'outil d'ingénierie des IED de téléprotection (16), de la définition du canal (301) dans l'autre module respectif (161, 160).

7. Un outil d'ingénierie de téléprotection (16) pour la téléprotection entre sous-stations, des messages de téléprotection selon IEC 61850 étant transmis sur un premier et un second réseau de communication de sous-station (11, 21) dans une première et une seconde sous-station (10, 20) d'un réseau électrique, respectivement, et des commandes de téléprotection étant transmises sur une liaison de téléprotection (300) entre un premier et un second IED de téléprotection (15, 25) connectés respectivement au premier et au second réseau de communication de sous-station (11, 21), comprenant :
- un module de génération de description de capacité IED, ICD (160),
**caractérisé en ce que**
ledit module de génération de description de capacité IED, ICD (160) est configuré pour générer, sur la base d'une définition de liaison de téléprotection (301) comprenant, pour chaque commande de téléprotection à transmettre sur la liaison de téléprotection (300), un schéma d'application de commande, un premier fichier ICD (TP_IED_A.ICD) pour une configuration d'une interface IEC 61850 (151) du premier IED de téléprotection (15), et un second fichier ICD (TP_IED_B.ICD) pour une configuration d'une interface IEC 61850 (251) du second IED de téléprotection (25).
